# EUROPEAN PATENT SPECIFICATION

(11) **EP 3 358 209 B1**
(45) Date of publication and mention of the grant of the patent: **06.04.2022**
(21) Application number: 16851536.9
(22) Date of filing: 27.09.2016
(51) Int. Cl.: F16C 35/02, F16C 17/02, F16C 27/06, F16C 33/20, F16C 29/00, F16C 29/02, F16H 19/04, F16H 55/28, B62D 3/12

(54) **BUSH BEARING AND BEARING MECHANISM PROVIDED THEREWITH**
BUCHSENLAGER UND LAGERMECHANISMUS DAMIT
PALIER LISSE ET MÉCANISME D'APPUI DOTÉ DUDIT PALIER

(30) Priority: 01.10.2015 JP 2015195573
(43) Date of publication of application: 08.08.2018
(73) Proprietor: Oiles Corporation, Tokyo 108-0075 (JP)
(72) Inventor: NAKAGAWA, Noboru, Fujisawa-shi Kanagawa 252-0811 (JP); YAMAGUCHI, Sho, Fujisawa-shi Kanagawa 252-0811 (JP); KIKUCHI, Hiroyuki, Fujisawa-shi Kanagawa 252-0811 (JP)
(74) Representative: Puschmann Borchert Kaiser Klettner Patentanwälte Partnerschaft mbB
(86) International application number: PCT/JP2016/078464
(87) International publication number: WO 2017/057365

(56) References cited:
- EP-A1- 2 202 129
- DE-A1-102009 037 068
- JP-A- 2013 047 560
- JP-A- 2013 047 560
- JP-U- S57 139 724
- US-A1- 2002 085 778

## Description

### [Technical Field]

The present invention relates to a bearing mechanism according to the preamble of claim 1.

### [Background Art]

Conventionally, a bush bearing which movably supports a shaft in an axial direction thereof and a bearing mechanism provided with the bush bearing are known. For example, a bush bearing which is provided between a housing and a rack shaft in a steering apparatus and which slidably supports the rack shaft is proposed (for example, refer to JP 2004 347 105 A).

The bush bearing described in JP 2004 347 105 A has a flange section and the bush bearing is mounted to a housing by inserting the flange section into a groove formed in the housing.

### [Summary of Invention]

### [Technical Problem]

However, with the configuration of the bush bearing and the housing described in JP 2004 347 105 A, a gap exists between the flange section and the housing in an axial direction of the housing. Due to the gap, the bush bearing moves along the axial direction due to vibration during travel of an automobile and causes the flange section to collide with the housing, thereby generating abnormal noise.

A bearing mechanism according to the preamble of claim 1 is described in JP 2013 047 560 A.

The present invention has been made in consideration of the circumstances described above and an object thereof is to provide a bush bearing capable of suppressing the generation of abnormal noise and a bearing mechanism provided with the bush bearing.

### [Solution to Problem]

In order to solve the problem described above, the present invention is provided with: a housing which has a cylindrical shape and has a fitted groove formed on an inner circumferential surface thereof; a bush bearing mounted to the inner circumferential surface of the housing; and a shaft supported by the bush bearing, wherein the bush bearing has a cylindrical bush main body, and a flange section configured to project outward from the bush main body in a radial direction thereof and to be fitted into the fitted groove, the flange section is provided with a plate-shaped section, and a protruding section configured to protrude from the plate-shaped section to one side in an axial direction of the bush main body, and has a fitting margin in the axial direction with respect to the fitted groove in the housing, a part of the flange section is configured to come into contact with a surface that forms the fitted groove in the housing and is positioned at another side in the axial direction, and the protruding section is configured to, in a state in which the plate-shaped section has elastically deformed, come into contact with a surface which forms the fitted groove in the housing and is positioned at the one side in the axial direction.

The plate-shaped section may protrude toward an outer side of the bush main body at one end of the flange section in the axial direction, and the protruding section may protrude to the one side in the axial direction at a tip of the plate-shaped section.

In addition, the plate-shaped section may extend along a circumferential direction of the bush main body at one end of the flange section in the axial direction, and the protruding section may protrude to the one side in the axial direction at a tip of the plate-shaped section.

Furthermore, the shaft supported by the bush bearing may be a rack shaft of a steering apparatus.

In addition, the present invention is a bush bearing provided between a housing which has a cylindrical shape and has a fitted groove formed on an inner circumferential surface thereof, and a shaft, the bush bearing including a cylindrical bush main body, and a flange section configured to project outward from the bush main body in a radial direction thereof and to be fitted into the fitted groove, wherein the flange section is provided with a plate-shaped section, and a protruding section configured to protrude from the plate-shaped section to one side in an axial direction of the bush main body, and has a fitting margin in the axial direction with respect to the fitted groove in the housing, a part of the flange section is configured to come into contact with a surface that forms the fitted groove in the housing and is positioned at another side in the axial direction, and the protruding section is configured to, in a state in which the plate-shaped section has elastically deformed, come into contact with a surface which forms the fitted groove in the housing and is positioned at the one side in the axial direction.

The plate-shaped section may protrude toward an outer side of the bush main body at one end of the flange section in the axial direction, and the protruding section may protrude to the one side in the axial direction at a tip of the plate-shaped section.

In addition, the plate-shaped section may extend along a circumferential direction of the bush main body at one end of the flange section in the axial direction, and the protruding section may protrude to the one side in the axial direction at a tip of the plate-shaped section.

Furthermore, the shaft may be a rack shaft of a steering apparatus and the bush bearing may support the rack shaft.

### [Advantageous Effects of Invention]

According to the present invention, a bush bearing capable of suppressing the generation of abnormal noise and a bearing mechanism provided with the bush bearing can be provided.

### [Brief Description of Drawings]

[Fig. 1]

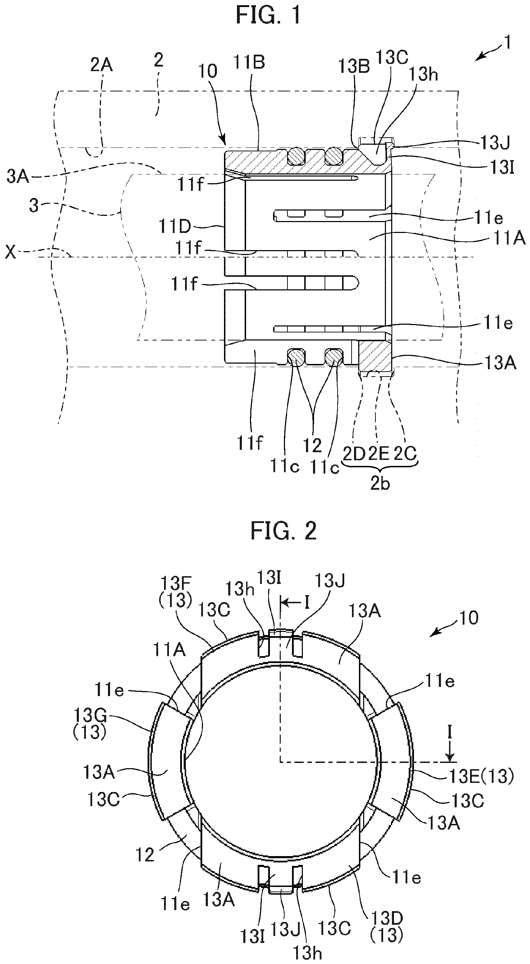

   Fig. 1 shows a sectional view taken along line I-I shown in Fig. 2 of a bush bearing according to a first embodiment.
[Fig. 2]
   Fig. 2 shows a diagram of the bush bearing according to the first embodiment as viewed from a side of a flange section.
[Fig. 3]

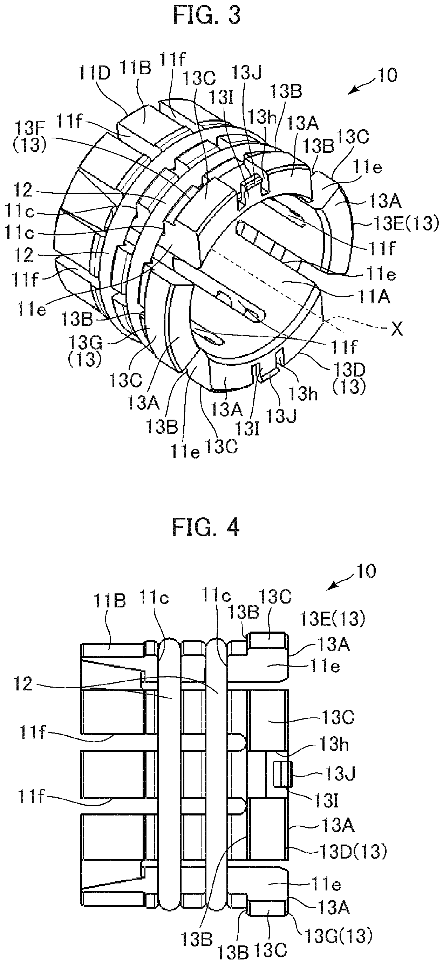

   Fig. 3 shows a perspective view of the bush bearing according to the first embodiment.
[Fig. 4]
   Fig. 4 shows a side view of the bush bearing according to the first embodiment.
[Fig. 5]

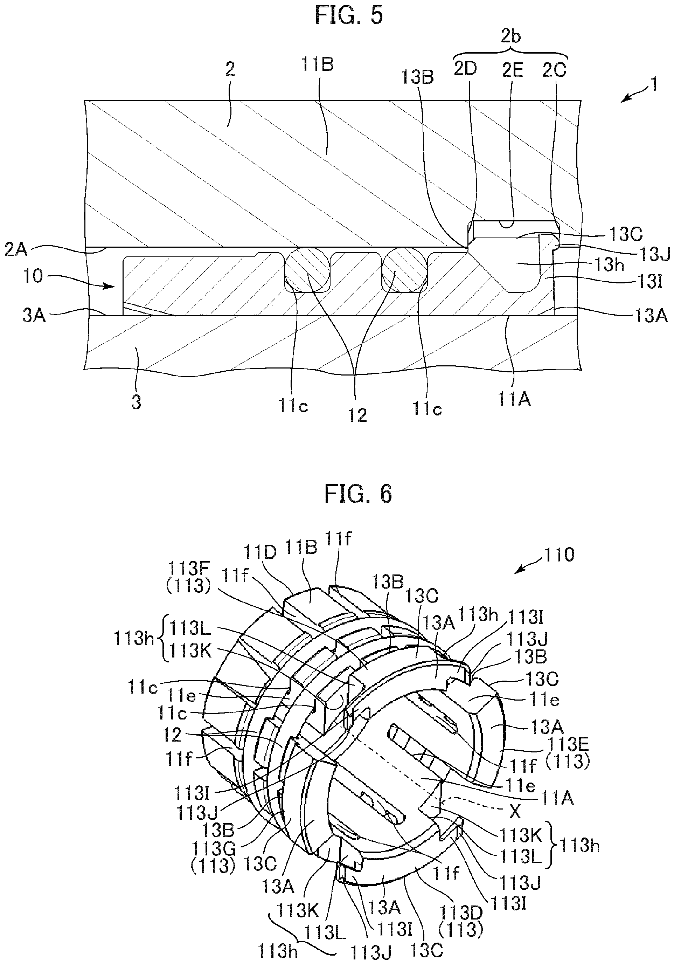

   Fig. 5 shows a partial enlarged view of a bearing mechanism representing a state where the bush bearing according to the first embodiment is mounted to a housing.
[Fig. 6]
   Fig. 6 shows a perspective view of a bush bearing according to a second embodiment.
[Fig. 7]

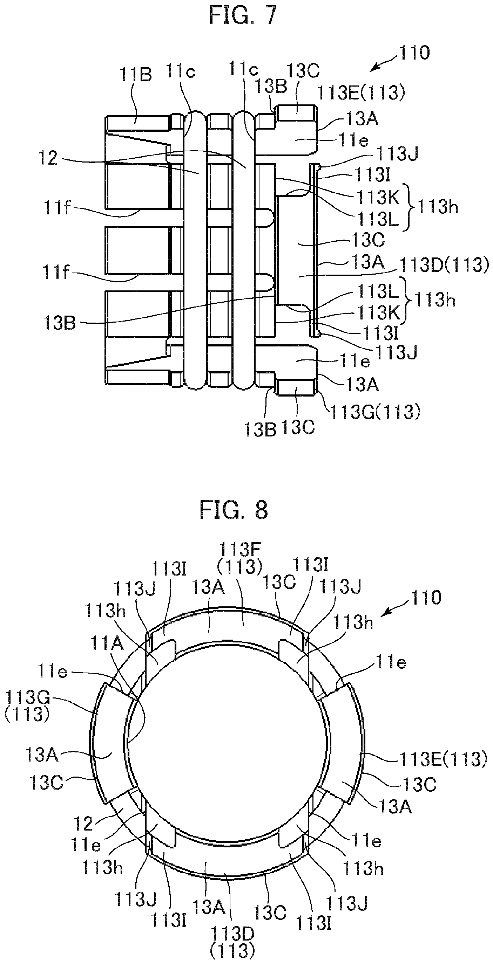

   Fig. 7 shows a side view of the bush bearing according to the second embodiment.
[Fig. 8]
   Fig. 8 shows a diagram of the bush bearing according to the second embodiment as viewed from a side of a flange section.
[Fig. 9]

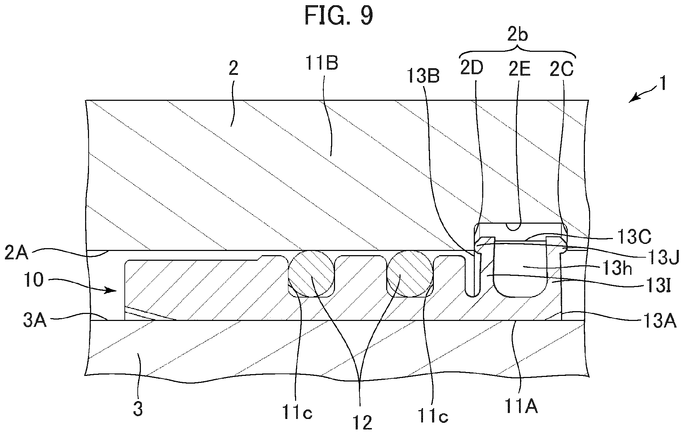

   Fig. 9 shows an explanatory diagram of a bush bearing according to a modification.

### [Description of Embodiments]

Next, a bush bearing and a bearing mechanism provided with the bush bearing according to a first embodiment will be described with reference to the drawings. Moreover, in the present embodiment, a case where a bush bearing and a bearing mechanism provided with the bush bearing are applied to a steering apparatus will be described.

Fig. 1 shows a sectional view taken along line I-I shown in Fig. 2 of a bush bearing 10 according to the first embodiment. Fig. 2 shows the bush bearing 10 as viewed from a side of a flange section 13. Fig. 3 shows a perspective view of the bush bearing 10. Fig. 4 shows a side view of the bush bearing 10. Fig. 5 shows a partial enlarged view of a bearing mechanism 1 representing a state where the bush bearing 10 is mounted to a housing 2.

### <Overall configuration of bearing mechanism 1>

As shown in Fig. 1, the bearing mechanism 1 according to the present embodiment constitutes a part of a rack-and-pinion steering apparatus mounted to a vehicle and includes the housing 2, a rack shaft 3, and the bush bearing 10.

### <Housing 2>

The housing 2 is made of metal such as aluminum, has a cylindrical shape, and is fixed to a vehicle body (not shown). An annular fitted groove 2b is formed on an inner circumferential surface 2A of the housing 2 along a circumferential direction of the housing 2. The fitted groove 2b is constituted by a pair of annular wall surfaces 2C and 2D which are perpendicular to an axial direction X of the housing 2 and an annular circumferential wall surface 2E which extends along the circumferential direction of the housing 2.

### <Rack shaft 3>

The rack shaft 3 has an approximately columnar shape and is provided so as to be movable along the axial direction X in the housing 2. A rack is provided in a part of the rack shaft 3. The rack is configured so as to mesh with a pinion of a pinion shaft of the steering apparatus. The pinion shaft is coupled to a steering wheel. In addition, both ends of the rack shaft 3 are coupled to wheels via a coupling mechanism (not shown).

### <Bush bearing 10>

As shown in Figs. 1 to 5, the bush bearing 10 includes a bush main body 11 and a plurality of (in the present embodiment, two) O rings 12. The bush bearing 10 is interposed between the inner circumferential surface 2A of the housing 2 and an outer circumferential surface 3A of the rack shaft 3.

The O rings 12 have an annular shape and are constituted by an elastic material such as rubber. A section of the O rings 12 cut along a plane perpendicular to a circumferential direction of the O rings 12 has a circular shape. Each O ring 12 is inserted into an insertion groove 11c (to be described later) in a tensioned state. In addition, an outer diameter of each O ring 12 is configured to be slightly larger than the inner circumferential surface 2A of the housing 2.

The bush main body 11 is made of resin and has a cylindrical shape. In a state where the bush bearing 10 is built into the housing 2, an axial direction of the bush main body 11 matches the axial direction X of the housing 2. An inner circumferential surface 11A of the bush main body 11 slidably supports the rack shaft 3. In addition, an inner diameter of the bush main body 11 is configured to be slightly larger than an outer diameter of the rack shaft 3, and an outer diameter of the bush main body 11 is configured to be smaller than an inner diameter of the housing 2 (refer to Fig. 1).

Two insertion grooves 11c extending in a circumferential direction are formed with an interval in an axial direction on an outer circumferential surface 11B of the bush main body 11. Each insertion groove 11c is formed across an entire circumferential region of the outer circumferential surface 11B of the bush main body 11 and has an annular shape. A section of each insertion groove 11c when cut along a plane including the axial direction X of the housing 2 has a rectangular concave shape. While the number of insertion grooves 11c and the number of O rings 12 are the same, there may be more insertion grooves than O rings.

A flange section 13 which projects toward an outer side in a radial direction of the bush main body 11 is integrally provided at one end (a right end in Fig. 1) of the bush main body 11 in the axial direction X. The flange section 13 is configured in an annular shape which is coaxial with the bush main body 11 as a whole. An outer diameter of the flange section 13 is configured to be larger than an inner diameter of the inner circumferential surface 2A of the housing 2 but smaller than an inner diameter of the circumferential wall surface 2E of the fitted groove 2b formed on the inner circumferential surface 2A (refer to Fig. 1).

The flange section 13 is constituted by a pair of end surfaces 13A and 13B which are perpendicular to the axial direction X of the housing 2 and an outer circumferential surface 13C which extends along the circumferential direction of the housing 2.

A plurality of (in the present embodiment, four) first slits 11e which extend toward an end surface 11D of the bush main body 11 from the end surface 13A of the flange section 13 are formed in the bush main body 11. The flange section 13 is divided into four sections (first to fourth flange sections 13D to 13G) by the first slits 11e. Therefore, the pair of end surfaces 13A and 13B and the outer circumferential surface 13C of the flange section 13 are also divided into four sections. Moreover, the first slits 11e intersect each insertion groove 11c.

A plurality of second slits 11f which extend toward the flange section 13 from the end surface 11D are formed in the bush main body 11. Two second slits 11f are formed at positions corresponding to the first and third flange sections 13D and 13F, and one second slit 11f is formed at positions corresponding to the second and fourth flange sections 13E and 13G. Each of the second slits 11f intersects each insertion groove 11c.

Notches 13h are respectively formed in central sections of the first and third flange sections 13D and 13F in the circumferential direction. Each notch 13h is formed so as to notch the end surfaces 13A and 13B and the outer circumferential surface 13C of the flange section 13. A plate-shaped section 13I which protrudes outward in the radial direction from an end on the side of the end surface 13A (the one side in the axial direction X) is provided inside each notch 13h. A thickness of the plate-shaped section 13I in the axial direction X is configured to be extremely small with respect to a thickness (a distance between the end surface 13A and the end surface 13B) of the flange section 13 in the axial direction X. A protruding section 13J that protrudes to the one side in the axial direction X is provided at a tip of the plate-shaped section 131.

Due to the protruding section 13J, widths of the first and third flange sections 13D and 13F in the axial direction X are configured so as to be larger than a width (a distance between the wall surfaces 2C and 2D) of the fitted groove 2b of the housing 2. In other words, the flange section 13 has a fitting margin in the axial direction X with respect to the fitted groove 2b in the housing 2.

In addition, as shown in Fig. 5, in a state where the flange section 13 is fitted into the fitted groove 2b in the housing 2, the end surface 13B abuts the wall surface 2D of the fitted groove 2b, and the protruding section 13J abuts the wall surface 2C in a state where the plate-shaped section 13I has bendingly deformed (elastically deformed). In this manner, the flange section 13 is fitted into the fitted groove 2b in the housing 2 in a state of having an elastic force in the axial direction X by the plate-shaped section 13I and the protruding section 13J.

In addition, the O rings 12 abut the inner circumferential surface 2A of the housing 2 in a state where the bush bearing 10 is mounted to the housing 2. Furthermore, the bush main body 11 is expanded under pressure as the rack shaft 3 is inserted into the bush bearing 10, and the O rings 12 are configured so as to be compressed by the bush main body 11 and the housing 2.

### <Operational advantages>

As described above, with the bearing mechanism 1 according to the present embodiment, the flange section 13 is provided with: the plate-shaped section 131; and the protruding section 13J that protrudes from the plate-shaped section 13I to one side in an axial direction X, the flange section 13 has a fitting margin in the axial direction X with respect to the fitted groove 2b in the housing 2, the end surface 13B of the flange section 13 comes into contact with the wall surface 2D that forms the fitted groove 2b in the housing 2 and is positioned at another side in the axial direction X, and in a state in which the plate-shaped section 13I has elastically deformed, the protruding section 13J comes into contact with the wall surface 2C that forms the fitted groove 2b in the housing 2 and is positioned at the one side in the axial direction.

More specifically, the plate-shaped section 13I protrudes toward an outer side of the bush main body 11 (outward in a radial direction) at one end of the flange section 13 in the axial direction X, and the protruding section 13J protrudes to one side in the axial direction X at a tip of the plate-shaped section 131.

According to this configuration, the flange section 13 is fitted into the fitted groove 2b in the housing 2 in a state of having an elastic force in the axial direction X by the plate-shaped section 13I and the protruding section 13J without a gap being formed between the flange section 13 and the housing 2 in the axial direction X. As a result, even when the bush bearing 10 is subjected to vibration, movement of the bush bearing 10 in the axial direction X can be fixed by the elastic force. Accordingly, the generation of abnormal noise due to the flange section 13 moving in the axial direction X and colliding with the housing 2 can be suppressed.

In addition, since the flange section 13 is fitted into the fitted groove 2b in the housing 2 as the plate-shaped section 13I of the flange section 13 elastically deforms (bendingly deforms), the bush bearing 10 can be readily assembled to the housing 2.

Next, a bush bearing 110 according to a second embodiment and a bearing mechanism provided with the bush bearing 110 will be described with reference to the drawings. Moreover, same members as those of the bush bearing 10 according to the first embodiment will be denoted by same reference numerals and descriptions thereof will be omitted, and only different portions will be described.

### <Bush bearing 110>

Fig. 6 shows a perspective view of the bush bearing 110. Fig. 7 shows a side view of the bush bearing 110. Fig. 8 shows the bush bearing 10 as viewed from a side of a flange section 113.

As shown in Figs. 6 to 8, in the flange section 113 of the bush bearing 110, among first to fourth flange sections 113D to 113G obtained by dividing the flange section 113 into four sections, shapes of the first flange section 113D and the third flange section 113G differ from the shapes of the first and third flange sections 13D and 13G according to the first embodiment.

Notches 113h are respectively formed at both ends on a side of the end surface 13A of the first and third flange sections 113D and 113F in the circumferential direction of the bush main body 11. Each notch 113h is formed so as to notch the end surfaces 13A and 13B and the outer circumferential surface 13C of the flange section 13 as well as the inner circumferential surface 11A of the bush main body 11. Each notch 113h is constituted by a first notched surface 113K which is parallel to the end surface 13A and a second notched surface 113L which is perpendicular to the first notched surface 113K.

A plate-shaped section 113I which extends along the circumferential direction of the bush main body 11 is provided inside each notch 113h at an end on the side of the end surface 13A (the one side in the axial direction X) of the second notched surface 113L. A gap is formed between the plate-shaped section 113I and the first notched surface 113K. A protruding section 113J that protrudes to the one side in the axial direction X is provided at a tip of the plate-shaped section 1131.

Due to the protruding section 113J, widths of the first and third flange sections 113D and 113F in the axial direction X are configured so as to be larger than a width (a distance between the wall surfaces 2C and 2D) of the fitted groove 2b in the housing 2 (Fig. 1). In other words, the flange section 113 has a fitting margin in the axial direction X with respect to the fitted groove 2b in the housing 2.

In addition, in a similar manner to the first embodiment, in a state where the flange section 113 is fitted into the fitted groove 2b in the housing 2, the end surface 13B abuts the wall surface 2D of the fitted groove 2b, and the protruding section 113J abuts the wall surface 2C in a state where the plate-shaped section 113I has bendingly deformed (elastically deformed). In this manner, the flange section 113 is fitted into the fitted groove 2b in the housing 2 in a state of having an elastic force in the axial direction X by the plate-shaped section 113I and the protruding section 113J.

### <Operational advantages>

As described above, the plate-shaped section 113I extends along a radial direction of the bush main body 11 at one end of the flange section 113 in the axial direction X, and the protruding section 113J protrudes to one side in the axial direction X at a tip of the plate-shaped section 1131. In addition, the flange section 113 has a fitting margin in the axial direction X with respect to the fitted groove 2b in the housing 2, and the flange section 113 is fitted into the fitted groove 2b in the housing 2 in a state of having an elastic force in the axial direction X by the plate-shaped section 113I and the protruding section 113J.

According to this configuration, also in the present embodiment, the flange section 113 is fitted into the fitted groove 2b in the housing 2 in a state of having an elastic force in the axial direction X by the plate-shaped section 113I and the protruding section 113J without a gap being formed between the flange section 113 and the housing 2 in the axial direction X in a similar manner to the bush bearing 10 according to the first embodiment and the bearing mechanism 1 provided with the bush bearing 10. As a result, even when the bush bearing 110 is subjected to vibration, movement of the bush bearing 110 in the axial direction X can be absorbed by the elastic force. Accordingly, the generation of abnormal noise due to the flange section 113 moving in the axial direction X and colliding with the housing 2 can be suppressed.

In addition, since the flange section 13 is fitted into the fitted groove 2b in the housing 2 as the plate-shaped section 13I of the flange section 13 elastically deforms (bendingly deforms), the bush bearing 10 can be readily assembled to the housing 2.

It should be noted that the present invention is not limited to the embodiments described above. Various additions, modifications, and the like of the present invention will occur to those skilled in the art within the scope of the appended claims.

For example, while the plate-shaped section 13I and the protruding section 13J are provided on the side of the end surface 13A of the flange section 13 (one side in the axial direction X) in the embodiment described above, the plate-shaped section 13I and the protruding section 13J may be provided on the side of the end surface 13B of the flange section 13 (the other side in the axial direction X) or, as shown in Fig. 9, provided at both sides of the end surfaces 13A and 13B of the flange section 13. According to this configuration, the flange section 13 is fitted into the fitted groove 2b in the housing 2 in a state of having an elastic force in the axial direction X by two plate-shaped sections 13I and two protruding sections 13J without a gap being formed between the flange section 13 and the housing 2 in the axial direction X. As a result, even when the bush bearing 10 is subjected to vibration, movement of the bush bearing 10 in the axial direction X can be absorbed by the elastic force. Accordingly, the generation of abnormal noise due to the flange section 13 moving in the axial direction X and colliding with the housing 2 can be suppressed. Moreover, also in the flange section 113 of the bush bearing 110 according to the second embodiment, the plate-shaped section 113I and the protruding section 113J may be provided on the side of the end surface 13B of the flange section 113 (the other side in the axial direction X) or provided at both sides of the end surfaces 13A and 13B of the flange section 113.

In addition, the directions in which the plate-shaped sections 13I and 113I protrude or extend are not limited to the directions shown in the embodiments described above.

Furthermore, while cases where the bearing mechanism 1 is applied to a steering apparatus and the bush bearings 10 and 100 support the rack shaft 3 have been described in the embodiments presented above, the bearing mechanism 1 may be applied to an apparatus other than a steering apparatus and the bush bearings 10 and 100 may support a shaft so as to be movable in an axial direction thereof.

### [Reference Signs List]

- 1: Bearing mechanism
- 2: Housing
- 2A: Inner circumferential surface
- 2b: Fitted groove
- 2C, 2D: Wall surface
- 3: Rack shaft
- 10, 110: Bush bearing
- 11: Bush main body
- 13, 113: Flange section
- 13I, 113I: Plate-shaped section
- 13J, 113J: Protruding section

## Claims

1. A bearing mechanism (1), comprising:
a housing (2) which has a cylindrical shape and has a fitted groove (2b) formed on an inner circumferential surface (2A) thereof;
a bush bearing (10, 110) mounted to the inner circumferential surface (2A) of the housing (2); and
a shaft (3) supported by the bush bearing (10, 110), wherein
the bush bearing (10, 110) has a cylindrical bush main body (11), and a flange section (13, 113) configured to project outward from the bush main body (11) in a radial direction thereof and to be fitted into the fitted groove (2b) ,
the flange section (13, 113) is provided with a plate-shaped section (131, 113I)) and a protruding section (13J, 113J) configured to protrude from the plate-shaped section (131, 1131) to one side in an axial direction (X) of the bush main body (11), and has a fitting margin in the axial direction (X) with respect to the fitted groove (2b) in the housing (2), and
wherein the protruding section (13J, 113J) comes into contact with a surface (2C, 2D) which forms the fitted groove (2b) in the housing (2) and is positioned at said one side in the axial direction (X), and
wherein the plate-shaped section (131, 1131) has a part, which is configured to come into contact with a surface (2D, 2C) which forms the fitted groove (2b) in the housing (2) and is positioned at another side in the axial direction (X),
**characterized in that**
in a state in which the protruding section (13J, 113J) is in contact with the surface (2C, 2D) which forms the fitted groove (2b) in the housing (2), the plate-shaped section (131, 1131) is bendingly deformed.

2. The bearing mechanism (1) according to claim 1, wherein
the plate-shaped section (131, 1131) is configured to protrude toward an outer side of the bush main body (11) at one end of the flange section (13, 113) in the axial direction (X), and
the protruding section (13J, 113J) is configured to protrude to the one side in the axial direction (X) at a tip of the plate-shaped section (131, 1131).

3. The bearing mechanism (1) according to claim 1, wherein
the plate-shaped section (131, 1131) is configured to extend along a circumferential direction of the bush main body (11) at one end of the flange section (13, 113) in the axial direction (X), and
the protruding section (13J, 113J) is configured to protrude to the one side in the axial direction (X) at a tip of the plate-shaped section (131, 1131).

4. The bearing mechanism (1) according to any one of claims 1 to 3, wherein the shaft (3) supported by the bush bearing (10, 110) is a rack shaft of a steering apparatus.

5. The bearing mechanism (1) according to claim 1, wherein the plate-shaped section (131, 1131) is configured to have in axial direction (X) a thickness, which is small with respect to a thickness of the flange section (13, 113) in the axial direction.

## Patentansprüche

1. Lagermechanismus (1), umfassend:
ein Gehäuse (2), das eine zylindrische Form aufweist und bei dem an seiner Innenumfangsfläche (2A) eine Passnut (2b) ausgebildet ist;
ein an der Innenumfangsfläche (2A) des Gehäuses (2) angebrachtes Buchsenlager (10, 110); und
eine in dem Buchsenlager (10, 110) gelagerte Welle (3), wobei das Buchsenlager (10, 110) einen zylindrischen Buchsenhauptkörper (11) und einen Flanschabschnitt (13, 113) aufweist, der konfiguriert ist, um von dem Buchsenhauptkörper (11) in radialer Richtung nach außen vorzustehen und in die Passnut (2b) eingepasst zu werden,
der Flanschabschnitt (13, 113) mit einem plattenförmigen Abschnitt (13I, 113I) und einem vorstehenden Abschnitt (13J, 113J) versehen ist, der konfiguriert ist, um von dem plattenförmigen Abschnitt (13I, 113I) auf einer Seite in axialer Richtung (X) des Buchsenhauptkörpers (11) hervorzustehen, und in axialer Richtung (X) in Bezug auf die Passnut (2b) in dem Gehäuse (2) einen Passrand aufweist, und
wobei der vorstehende Abschnitt (13J, 113J) mit einer Oberfläche (2C, 2D) in Kontakt kommt, die die Passnut (2b) in dem Gehäuse (2) bildet und auf der einen Seite in axialer Richtung (X) angeordnet ist, und
wobei der plattenförmige Abschnitt (13I, 113I) einen Teil aufweist, der konfiguriert ist, um mit einer Oberfläche (2D, 2C) in Kontakt zu kommen, die die Passnut (2b) in dem Gehäuse (2) bildet und auf einer anderen Seite in axialer Richtung (X) angeordnet ist,
**dadurch gekennzeichnet,**
**dass** bei einem Kontaktzustand des vorstehenden Abschnitts (13J, 113J) mit der Oberfläche (2C, 2D), die die Passnut (2b) in dem Gehäuse (2) bildet, der plattenförmige Abschnitt (13I, 113I) biegeverformt ist.

2. Lagermechanismus (1) nach Anspruch 1, bei dem
der plattenförmige Abschnitt (13I, 113I) konfiguriert ist, um zu einer Außenseite des Buchsenhauptkörpers (11) hin an einem Ende des Flanschabschnitts (13, 113) in axialer Richtung (X) vorzustehen, und
der vorstehende Abschnitt (13J, 113J) konfiguriert ist, um zu der einen Seite in axialer Richtung (X) an einer Spitze des plattenförmigen Abschnitts (13I, 113I) vorzustehen.

3. Lagermechanismus (1) nach Anspruch 1, bei dem
der plattenförmige Abschnitt (13I, 113I) konfiguriert ist, um sich entlang einer Umfangsrichtung des Buchsenhauptkörpers (11) an einem Ende des Flanschabschnitts (13, 113) in axialer Richtung (X) zu erstrecken, und
der vorstehende Abschnitt (13J, 113J) konfiguriert ist, um zu der einen Seite in axialer Richtung (X) an einer Spitze des plattenförmigen Abschnitts (13I, 113I) vorzustehen.

4. Lagermechanismus (1) nach einem der Ansprüche 1 bis 3,
bei dem die im Buchsenlager (10, 110) gelagerte Welle (3) eine Zahnstangenwelle einer Lenkvorrichtung ist.

5. Lagermechanismus (1) nach Anspruch 1,
bei dem der plattenförmige Abschnitt (13I, 113I) derart konfiguriert ist, dass er in axialer Richtung (X) auf eine Dicke des Flanschabschnitts (13, 113) in axialer Richtung bezogen eine geringe Dicke aufweist.

## Revendications

1. Mécanisme de palier (1) comprenant :
un boîtier (2) qui a une forme cylindrique et a une gorge ajustée (2b) formée sur sa surface circonférentielle interne (2A) ;
un palier lisse (10, 110) monté sur la surface circonférentielle interne (2A) du boîtier (2) ; et
un arbre (3) supporté par le palier lisse (10, 110), dans lequel :
le palier lisse (10, 110) a un corps principal de douille cylindrique (11), et une section de bride (13, 113) configurée pour faire saillie vers l'extérieur à partir du corps principal de douille (11) dans sa direction radiale et être monté dans la gorge ajustée (2b),
la section de bride (13, 113) est prévue avec une section en forme de plaque (13I, 113I) et une section en saillie (13J, 113J) configurée pour faire saillie de la section en forme de plaque (13I, 113I) vers un côté dans une direction axiale (X) du corps principal de douille (11) et a une marge d'ajustement dans la direction axiale (X) par rapport à la gorge ajustée (2b) dans le boîtier (2), et
dans lequel la section en saillie (13J, 113J) vient en contact avec une surface (2C, 2D) qui forme la gorge ajustée (2b) dans le boîtier (2) et est positionnée au niveau dudit un côté dans la direction axiale (X), et
dans lequel la section en forme de plaque (13I, 113I) a une partie qui est configurée pour venir en contact avec une surface (2D, 2C) qui forme la gorge ajustée (2b) dans le boîtier (2) et est positionnée au niveau d'un autre côté dans la direction axiale (X),
**caractérisé en ce que :**
dans un état dans lequel la section en saillie (13J, 113J) est en contact avec la surface (2C, 2D) qui forme la gorge ajustée (2b) dans le boîtier (2), la section en forme de plaque (13I, 113I) est déformée par pliage.

2. Mécanisme de palier (1) selon la revendication 1, dans lequel :
la section en forme de plaque (13I, 113I) est configurée pour faire saillie vers un côté externe du corps principal de douille (11) au niveau d'une extrémité de la section de bride (13, 113) dans la direction axiale (X), et
la section en saillie (13J, 113J) est configurée pour faire saillie vers le un côté dans la direction axiale (X) au niveau d'une pointe de la section en forme de plaque (13I, 113I).

3. Mécanisme de palier (1) selon la revendication 1, dans lequel :
la section en forme de plaque (13I, 113I) est configurée pour s'étendre le long d'une direction circonférentielle du corps principal de douille (11) au niveau d'une extrémité de la section de bride (13, 113) dans la direction axiale (X), et
la section en saillie (13J, 113J) est configurée pour faire saillie vers le un côté dans la direction axiale (X) au niveau d'une pointe de la section en forme de plaque (13I, 113I).

4. Mécanisme de palier (1) selon l'une quelconque des revendications 1 à 3, dans lequel l'arbre (3) supporté par le palier lisse (10, 110) est un arbre de crémaillère d'un appareil de direction.

5. Mécanisme de palier (1) selon la revendication 1, dans lequel la section en forme de plaque (13I, 113I) est configurée pour avoir, dans une direction axiale (X), une épaisseur qui est petite par rapport à une épaisseur de la section de bride (13, 113) dans la direction axiale.
